# DEMANDE DE BREVET EUROPEEN

(11) **EP 0 568 429 A1**
(43) Date de publication de la demande: **03.11.1993**
(21) Numéro de dépôt: 93401061.2
(22) Date de dépôt: 23.04.1993
(51) Int. Cl.: H04L 7/033, H04J 3/07

(54) **Régénérateur de signaux numériques formés de trames, notamment pour installation de transmission numérique par voie hertzienne**

(30) Priorité: 28.04.1992 FR 9205233
(71) Demandeur: ALCATEL TELSPACE, F-92734 Nanterre Cédex (FR)
(72) Inventeur: Roux, Pierre, F-95100 Argenteuil (FR)
(74) Mandataire: Schaub, Bernard

(57) **Abrégé**

Un régénérateur pour régénérer un signal numérique reçu formé de trames incluant des éléments de justification, notamment pour installation de transmission numérique par voie hertzienne, caractérisé par un agencement (2,3,4) associant les mécanismes de justification au fonctionnement d'un égaliseur autoadaptatif fractionné modifié pour accepter des ordres de rotation de ses coefficient. Le régénérateur selon l'invention n'accumule pas de gigue et peut être réalisé entièrement à l'aide de circuits numériques.

## Description

L'invention se rapporte à un régénérateur pour transmettre des trames de signaux numériques incluant des éléments de charge et des éléments de justification (63,64), comprenant un moyen d'extraction pour extraire les signaux numériques des trames incidentes reçues à un rythme d'émission, un moyen de reconstruction incluant une mémoire dans laquelle sont enregistrés temporairement lesdits signaux numériques extraits des trames incidentes et agencé pour former des trames à transmettre au rythme d'un signal d'horloge interne à partir des signaux numériques enregistrés dans la mémoire, et un moyen de commande qui agit sur lesdits signaux numériques extraits des trames incidentes pour compenser des différences entre le rythme d'émission et le rythme du signal d'horloge locale.

Un tel régénérateur est connu de la demande de brevet WO88.07300. Ce type de régénérateur convient pour les réseaux de transmissions de signaux numériques sur de longues distances et en particulier par le faisceau hertzien.

Dans une chaîne de transmission numérique, l'émetteur est souvent associé à des opérations de multiplexage plésiochrone et construit un signal numérique composite formé de trames. Chaque trame est classiquement constituée d'éléments de trame successifs sous forme d'impulsions émises par l'émetteur à un rythme d'émission. Les éléments de trame comprennent classiquement des éléments de charge, des éléments d'indication de justification et au moins un élément d'opportunité de justification.

Le régénérateur connu du document cité ci-dessus est prévu pour ne pas accumuler de gigue entre deux noeuds d'un réseau. Cette gigue apparaît dans les régénérateurs qui utilisent un rythme d'émission des trames dérivé du rythme de réception des trames.

Dans ce régénérateur connu, le module d'extraction dérive un premier signal d'horloge des signaux numériques extraits des trames reçues par une boucle à verrouillage de phase. Ces signaux numériques incluant les éléments de charge et les éléments de justification sont enregistrés dans la mémoire au rythme de ce premier signal d'horloge et lus dans celle-ci au rythme d'un signal d'horloge locale pour former des trames régénérées. Le module de reconstruction est agencé de manière supprimer ou ajouter des éléments de justification dans les trames régénérées sous le contrôle du moyen de commande de manière à compenser des différences entre le rythme d'émission des trames régénérées et le rythme de réception des trames incidentes. Un problème posé par ce type de régénérateur est que les trames régénérées n'ont pas forcément la même taille que les trames incidentes par suite d'une opération de suppression ou d'ajout d'éléments de justification. Il est alors nécessaire d'inclure dans chaque trame régénérée un champs supplémentaire d'information donnant le nombre d'éléments de justification de la trame. Par ailleurs, l'agencement de ce type de régénérateur n'est pas adapté à des trames de signaux numériques incluant des éléments de justification comprenant des éléments d'indication de justification et des éléments d'opportunité de justification placés à poste fixe à l'intérieur de chaque trame. Pour ce type de trames, il n'est pas possible de modifier la place des éléments de justification dans la trame au moment de la reconstruction. Il n'est pas non plus possible de réduire ou d'augmenter la taille de la trame. Par ailleurs, certains éléments d'opportunité de justification sont susceptibles d'être des bits d'information utile. De tels éléments d'opportunité de justification ne peuvent donc pas être supprimés pour compenser des différences de rythmes.

Le but de l'invention est de remédier aux inconvénients cités ci-dessus en proposant un régénérateur qui n'accumule pas de gigue, ne comporte pas de boucle à verrouillage de phase, et qui est adapté à des trames incluant des éléments d'indication de justification et des éléments d'opportunité de justification.

A cet effet, l'invention a pour objet un régénérateur caractérisé en ce que:
a) le moyen d'extraction comprend un égaliseur fractionné à plusieurs prises commandées à une fréquence multiple du rythme du signal d'horloge locale qui fournit des signaux numériques des trames incidentes au rythme du signal d'horloge locale, le moyen d'extraction étant agencé pour dériver un premier signal d'erreur (d-) et un second signal d'erreur (d+) représentatifs de différences entre le rythme d'émission et le rythme du signal d'horloge locale, l'égaliseur étant agencé pour supprimer ou dupliquer des signaux numériques en réponse à un premier (c-) ou à un second (c+) signal de commande;
b) le moyen de commande est agencé pour dériver à partir des signaux numériques présents en sortie de l'égaliseur, d'une part, un premier signal de contrôle (Tc) indiquant qu'un élément de charge inclus dans une trame incidente est présent en sortie de l'égaliseur, et d'autre part, un second signal de contrôle (Tb) indiquant qu'un élément de justification d'une trame incidente contenant une information de bourrage est présent dans l'égaliseur, dériver le premier signal de commande (c-) à partir du premier signal d'erreur (d-) et du second signal de contrôle (Tb) de sorte que l'égaliseur supprime uniquement des éléments de bourrage des trames incidentes en réponse au premier signal de commande (c-) et dériver le second signal de commande (c+) à partir du second signal d'erreur (d+) de manière à ce que l'égaliseur duplique des éléments de charge ou des éléments de justification des trames incidentes en réponse au second signal de commande (c+);
c) le moyen de reconstruction de trame est agencé pour commander l'enregistrement dans la mémoire des éléments de charge indiqués par ledit premier signal de contrôle (Tc) et former des trames à transmettre à partir des éléments de charges enregistrés dans la mémoire et d'éléments de justification régénérés.

Le régénérateur selon l'invention a l'avantage d'être exempt de boucles à verrouillage de phase. Il peut donc être réalisé facilement à l'aide de circuits numériques qui ne nécessitent aucun pré-réglage avant leur mise en service.

Un exemple de réalisation de l'invention est décrit en détail ci-dessous en référence aux figures.

La figure 1 représente schématiquement le régénérateur selon l'invention sous forme de blocs fonctionnels.

La figure 2 est une représentation détaillée d'une partie du régénérateur incluant l'égaliseur fractionné.

Les figures 3A et 3B représentent de façon plus détaillée des éléments de l'égaliseur visible sur la figure 2.

La figure 4 représente une trame d'un signal numérique reçu par le régénérateur et/ou régénéré par celui-ci.

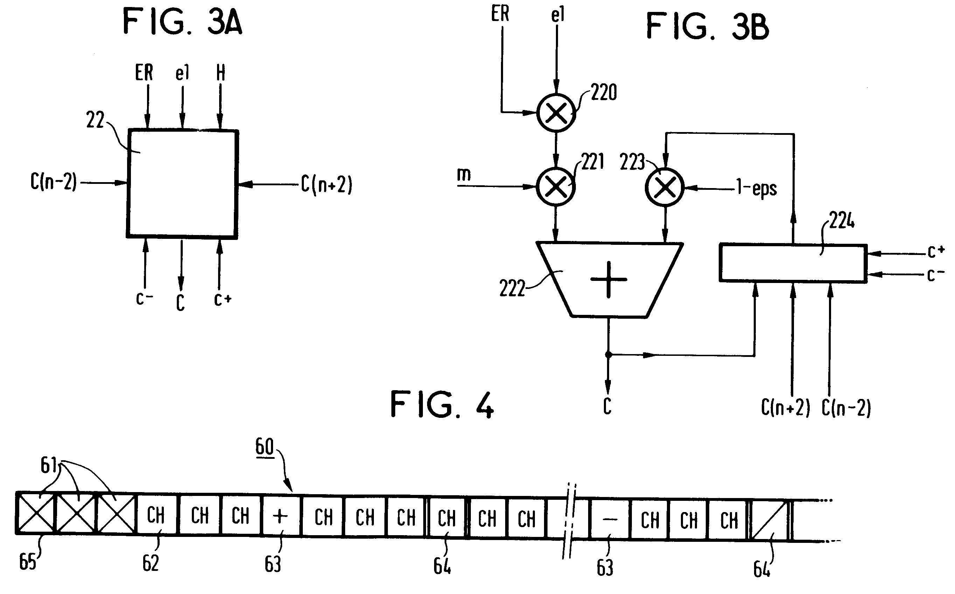

Le régénérateur conforme à l'invention est adapté pour régénérer un signal numérique incident formé de trames. Un exemple de trame 60 formant le signal numérique reçu par le régénérateur est montrée sur la figure 4. Elle est constituée d'éléments de trame 65 successifs comprenant classiquement des éléments de verrouillage de trame 61 regroupés en début de trame pour former un mot de verrouillage de trame, des éléments de charge 62 contenant une information utile symbolisée par les lettres CH, et des éléments de justification 63,64 intercalés entre des éléments de charge. Les éléments de trame peuvent être vus comme des ensembles de bits. Les éléments de justification comprennent des éléments d'indication de justification 63 contenant une information d'indication de justification symbolisée par les signes + ou - et des éléments d'opportunité de justification 64 contenant soit une information utile symbolisée par les lettres CH soit une information de bourrage symbolisée le signe /. Un ou plusieurs éléments d'indication de justification précèdent un élément d'opportunité de justification et indiquent, de par leur contenu, si l'élément d'opportunité de justification contient une information utile ou une information de bourrage. Dans l'exemple représenté chaque élément d'opportunité de justification est précédé d'un seul élément d'indication de justification. A titre d'exemple, et pour faciliter la compréhension de l'invention, le symbole + dans un élément d'indication de justification indique que l'élément d'opportunité de justification qui suit contient une information utile tandis que le symbole - indique que l'élément d'opportunité de justification est un élément de bourrage. Il faut comprendre que toutes les trames formant le signal numérique reçu comprennent le même nombre d'éléments de trame 65 et le même nombre d'éléments de justification répartis dans les trames aux mêmes endroits. Ce type de codage, au demeurant classique en soi, permet de réaliser des opérations de multiplexage plésiochrone comme cela est bien connu.

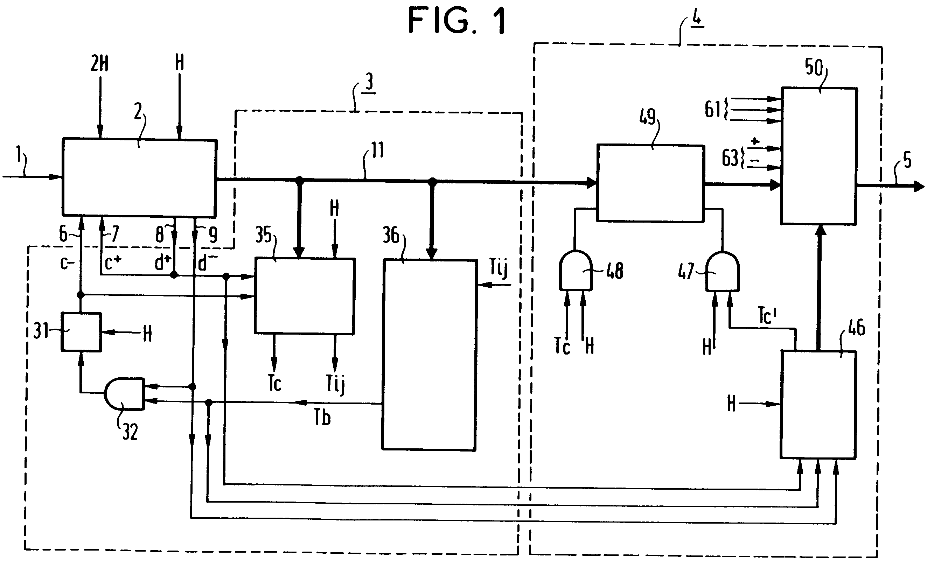

En se reportant maintenant à la figure 1, un régénérateur conforme à l'invention comprend un module d'entrée 2 qui reçoit le signal numérique, présent en 1, formé de trames telles que 60. La fonction de ce module d'entrée est d'échantillonner le signal reçu, après démodulation éventuelle, pour fournir une succession d'éléments de trame 65 au rythme d'un signal d'horloge interne H. Le module d'entrée fournit aussi deux signaux d'erreur d+ et d- présents respectivement en 8 et 9, et est sensible à deux signaux de commande c+ et c- présents respectivement en 6 et 7. Les deux signaux d'erreur d+ ou d- sont chacun représentatifs d'une différence de phase entre le rythme du signal d'horloge interne et le rythme d'émission des éléments de trames reçus par le module d'entrée. En réponse à l'un des deux signaux d'erreur, un module de commande 3 fournit l'un des deux signaux de commande au module d'entrée 2. En réponse à l'un de ces deux signaux de commande, le module d'entrée agit dans la succession d'éléments de trame sur les éléments de justification 63, 64 comme indiqué ci-dessous.

Le régénérateur comprend aussi un module de reconstruction de trames tel que 4, qui est sensible aux signaux de commande. Il a pour fonction de reconstruire de nouvelles trames à partir de certains éléments de trame fournis par le module d'entrée et produire en 5 un signal numérique régénéré formé des nouvelles trames.

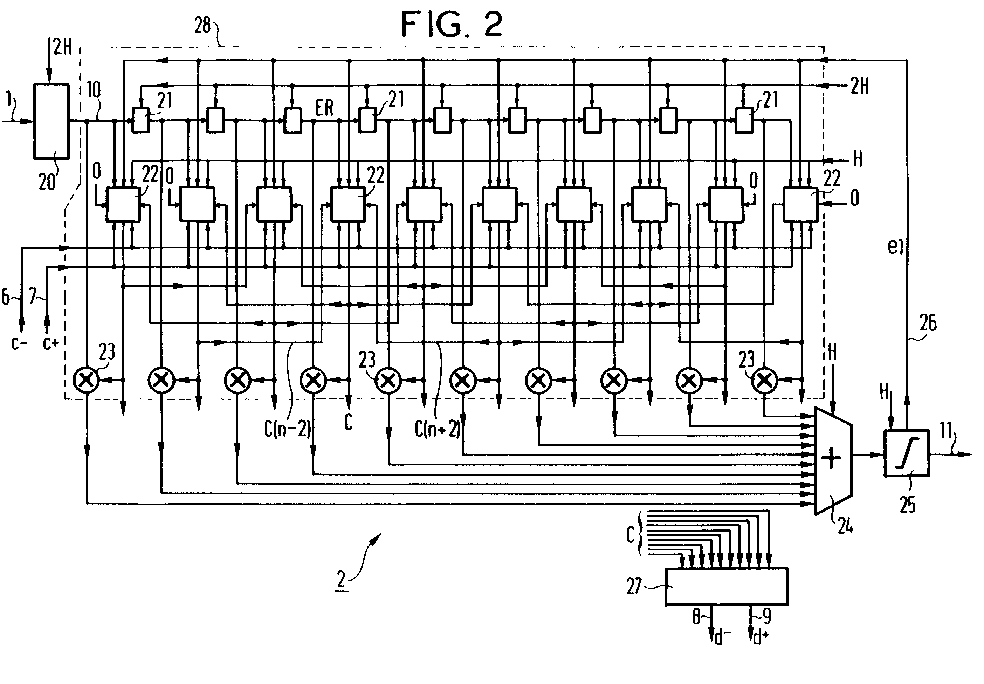

Sur la figure 2, le module d'entrée représenté en détail comprend essentiellement un égaliseur fractionné modifié pour produire les signaux d'erreur et réagir aux signaux de commande. L'utilisation de cet égaliseur fractionné permet de supprimer toute boucle à verrouillage de phase analogique. Il comprend aussi un convertisseur analogique/numérique 20 qui reçoit le signal numérique présent en 1 et l'échantillonne à un rythme multiple du rythme du signal d'horloge interne H, par exemple 2H, pour produire classiquement des échantillons numériques présents en 10. L'égaliseur fractionné proprement dit se présente sous la forme d'un filtre transverse 28 alimenté par les échantillons numériques produits par le convertisseur 20 à raison de deux échantillons par temps symboles. Le filtre transverse est composé de prises à retard 21 commandées par le signal d'horloge 2H pour maintenir plusieurs échantillons numériques successifs. Le filtre transverse 28 comprend aussi des blocs 22 de calcul de coefficients dont le détail est montré aux figures 3A et 3B. Les échantillons numériques présents en 10 ou retardés dans les prises à retard 21 sont multipliés par des coefficients dans des multiplieurs 23. Les multiplieurs 23 sont reliés à un circuit additionneur 24 qui produit au rythme du signal d'horloge H des symboles. Le circuit additionneur 24 est relié à un circuit de décision 25 qui fournit des symboles décidés présents en 11, au rythme du signal d'horloge H, et un signal d'erreur e1 présent en 26. Les symboles décidés présents en 11 correspondent à des éléments de trame. Le signal d'erreur présent en 26 est fourni aux blocs 22 de calcul de coefficients. Le signal d'erreur e1 représente classiquement la différence entre les échantillons reçus en entrée du circuit de décision et les symboles décidés. Les coefficients fournis par les blocs 22 sont calculés en appliquant un algorithme dit "du minimum de l'erreur quadratique moyenne, avec force de rappel à zéro" (appelée couramment "Tap leakage algorithm").

En se reportant aux figures 3A et 3B, un bloc 22 de calcul des coefficients reçoit le signal d'horloge H, le signal d'erreur el présent en 26, des échantillons retardés ER, des coefficients C(-2) et C(+2) provenant de deux blocs 22 de calcul de coefficients adjacents au bloc 22 en question tels qu'indiqués par la figure 2. Les deux blocs 22 à l'extrémité gauche de la figure 2 reçoivent en tant que coefficients C(-2) des coefficients nuls représentés par la référence 0 et les deux blocs 22 à l'extrémité droite de la figure 2 reçoivent en tant que coefficients C(+2) des coefficients nuls représentés aussi par la référence 0. Sur la figure 2, on a représenté un exemple de réalisation d'un filtre transverse comprenant neuf prises à retard 22 associées à dix blocs 22 de calcul de coefficients. Le nombre de prises à retard peut facilement être modifié par l'homme de l'art en fonction des caractéristiques du canal de transmission du signal numérique reçu par le module d'entrée 2. Les blocs 22 reçoivent aussi les signaux de commande c+ et c-. Chaque bloc 22 de calcul produit un coefficient C à partir des informations d'entrée citées précédemment.

Sur la figure 3B représentant en détail un bloc 22 de calcul d'un coefficient C, le signal d'erreur e1 est corrélé avec les échantillons retardés ER dans un multiplieur 220. La sortie du multiplieur 220 est pondérée, dans un multiplieur 221, par un facteur m représentatif d'un pas d'intégration qui est choisi en fonction de la vitesse de convergence souhaitée des coefficients. La sortie du multiplieur 221 alimente un intégrateur 222. Le bloc 22 de calcul d'un coefficient comporte aussi un organe multiplexeur 224 sensible aux signaux de commande c+ et c-, et permettant de substituer au résultat de l'accumulateur qui est associé au coefficient C(n), celui associé au coefficient C(n+2) ou C(n-2). Un multiplieur 223 est inséré dans la boucle d'intégration pour biaiser l'intégrateur de façon à introduire une force de retour à zéro, nécessaire pour le contrôle d'un égaliseur fractionné. Le coefficient multiplicateur est 1- eps avec eps proche de 0 (zéro).

Selon un autre aspect de l'invention, le bloc 22 de calcul d'un coefficient C est agencé pour fonctionner de la façon suivante. En réponse au signal de commande c+, le bloc 22 de calcul retourne en tant que coefficient C(n) le coefficient C(n-2) ce qui entraîne une première rotation des coefficients C dans l'égaliseur 28. L'effet du signal de commande c+ sur les blocs 22 de calcul est la duplication d'un symbole: le signal numérique d'entrée est "retardé", en sortie de l'égaliseur, d'un temps symbole. En réponse au signal de commande c-, le bloc 22 de calcul retourne en tant que coefficient C(n) le coefficient C(n+2) ce qui entraîne une rotation des coefficients C dans l'égaliseur 28 inverse de la première rotation. L'effet du signal de commande c- sur les blocs 22 de calcul est la suppression d'un symbole: le signal numérique d'entrée est "avancé", en sortie de l'égaliseur, d'un temps symbole.

La valeur des coefficients fournis par les blocs 22 de calcul évoluent en fonction de la différence de phase entre le rythme du signal d'horloge H et le rythme d'émission des éléments de trames reçus. Les coefficients C comprennent classiquement un coefficient particulier dit coefficient central fournit par le bloc 22 de calcul se situant sensiblement au milieu de la ligne de blocs 22 de calcul. Dans le cas d'exemple représenté sur la figure 2, le coefficient central peut être délivré par le cinquième bloc 22 de calcul à partir de la gauche sur la figure 2. Les coefficients délivrés par les blocs 22 de calcul placés à droite de ce bloc délivrent des coefficients C symétriques de ceux délivrés par les blocs 22 de calcul placés à gauche du bloc 22 en question lorsque le rythme du signal d'horloge H est identique au rythme des éléments de trames reçus. L'instant d'échantillonnage dans le convertisseur 20 est dit "optimal". Lorsque l'instant d'échantillonnage n'est pas optimal, une dissymétrie apparaît sur les coefficients C qui est exploitée par un circuit de détection d'erreur de pointage 27. Le circuit de détection d'erreur de pointage 27 produit les signaux d'erreur d- et d+, respectivement présents en 8 et 9, à partir de l'inspection des coefficients C fournis par les blocs 22 de calcul de coefficients. L'erreur de pointage peut correspondre à une différence de valeurs de deux coefficients placés de part et d'autre du coefficient central. Le signal d'erreur d+ est produit par le circuit 27 lorsque cette différence de valeurs de coefficients est supérieure à une première valeur de seuil positive et le signal d'erreur d- est produit par le circuit 27 lorsque cette différence de valeurs de coefficients est inférieure à une seconde valeur de seuil négative. Tant que la différence de valeurs de coefficients est située entre les valeurs de seuil, le circuit 23 ne produit pas de signal d'erreur. Il faut comprendre que le signal d'erreur d+ indique un rythme d'horloge interne plus rapide que le rythme d'émission des éléments de trame tandis que le signal d'erreur d- indique un rythme d'horloge interne plus lent que le rythme d'émission des éléments de trames. Les valeurs de seuil sont chargées dans une mémoire du circuit 27 préalablement à la mise en service du régénérateur.

En se reportant de nouveau à la figure 1, le module de commande 3 comprend un bloc 35 d'identification de mots de verrouillage de trame qui identifie le début de chaque trame reçue à partir de l'inspection du contenu des éléments de trames fournis par le module d'entrée 2 et présents en 11 pour fournir un signal Tc indiquant que l'élément de trame 65 présent en 11 et référencé par le signal d'horloge H est un élément de charge tel que 62 et un signal Tij indiquant que l'élément de trame est un élément d'indication de justification tel que 63.

Le module de commande 3 comprend aussi un bloc d'extraction d'information de justification 36 qui examine le contenu des éléments de trames présents en 11 qui sont désignés par le signal Tij pour produire un signal anticipé Tb indiquant que l'élément d'opportunité de justification 64 à venir qui suit ces éléments d'indication de justification examinés est un élément de bourrage.

Selon un mode de réalisation du régénérateur selon l'invention, le signal d'erreur d+ présent en 8 est directement appliqué en entrée du module d'entrée 2, après adaptation éventuelle, en tant que signal de commande c+ présent en 7. En réponse au signal de commande c+, le module d'entrée duplique un symbole correspondant soit à un élément de charge, soit à un élément d'indication de justification, soit à un élément d'opportunité de justification. Le bloc 35, en réponse au signal d'erreur d+, n'engendre pas de signal Tc pour désigner ce symbole décidé dupliqué présent en 11 comme élément de charge.

A la différence du signal d'erreur d+, le signal d'erreur d- fourni par le module d'entrée n'agit pas directement en tant que signal de commande c- du fait que la suppression d'un symbole décidé, dans la succession des symbole décidés fournis par le module d'entrée 2, ne peut être appliquée que sur un élément de bourrage. Comme visible sur la figure 1, le signal d'erreur d- est combiné avec le signal Tb dans une porte ET 32 dont la sortie est fournie en tant que signal de commande c- au module d'entrée 2 au travers d'une bascule bistable 31. La bascule bistable 31 est activée par le signal d'horloge H de manière à fournir le signal de commande c- au module d'entrée pendant un temps symbole. En réponse au signal de commande c-, le module d'entrée supprime un élément de bourrage tel que 64 dans la succession des éléments de trame qu'il fournit en sortie.

Le module d'entrée 2 agit par conséquent sur la longueur des trames reçues en ajoutant un élément de trame ou en supprimant un élément de trame en fonction du déphasage entre le rythme du signal d'horloge interne et le rythme d'émission des éléments de trames reçus. Si n est le nombre d'éléments de trame 65 d'une trame reçue telle que 60, le module d'entrée 2 restitue une trame contenant soit le même nombre d'éléments de trames que la trame reçue, soit un nombre inférieur (de un élément) ou soit un nombre supérieur (de un élément). Le module de reconstruction de trames 4 a pour rôle de reconstruire des nouvelles trames de longueur constante ayant n éléments de trames.

Sur la figure 1, le module de reconstruction de trames 4 comprend une mémoire 49, du type "FIFO" ayant une capacité suffisante pour enregistrer temporairement au moins une succession d'éléments de trame 65 contenus dans une trame reçue. La mémoire 49 est commandée en écriture par une combinaison du signal d'horloge interne H et du signal Tc dans une porte ET 48 de manière à enregistrer temporairement seulement la succession d'éléments de charge 62. La mémoire 49 est commandée en lecture par une combinaison du signal d'horloge interne H et d'un signal Tc' d'indication d'élément de charge dans la trame reconstruite dans une porte ET 47 de manière à amener les éléments de charge, enregistrés temporairement dans la mémoire 49, en entrée d'un multiplexeur 50 et selon une répartition temporelle désirée. Le module de reconstruction de trames 4 reçoit en outre du module de commande 3 les signaux d'erreur d+ et d- ainsi que le signal Tb pour comptabiliser, à chaque trame reçue, le nombre d'éléments de bourrage 64 nécessaires pour la nouvelle trame à reconstruire. Cette comptabilisation peut être faite, dans un circuit programmable 46, par un compteur incrémenté en réponse au signal d'erreur d+ (duplication d'un élément de trame) fourni par le module d'entrée ou en réponse au signal Tb fourni par le bloc d'extraction d'information de justification 36, lorsque ce signal n'est pas associé au signal d'erreur d- indiquant que l'élément de bourrage incident a été supprimé. En outre aux instants d'opportunité de bourrage de la trame sortante, si ce compteur est positif il est décrémenté et un élément de bourrage est introduit. Le circuit programmable 46 fournit au multiplexeur 50, soit les éléments de charge 62 lus dans la mémoire 49 par l'intermédiaire du signal Tc', soit de nouveaux éléments d'indication de justification 63 ou des éléments de bourrage 64 reconstitués, ou bien encore des éléments du mot de verrouillage de trame 61.

Le multiplexeur 50 fournit en sortie des nouvelles trames présentes en 5 formant un signal numérique régénéré. Le niveau de déphasage entre le rythme du signal d'horloge interne du régénérateur et le rythme d'émission du signal reçu incident accepté par le régénérateur selon l'invention est fonction du nombre d'éléments de bourrage 64 disponibles dans les trames reçues par le module d'entrée 2 du régénérateur.

Le régénérateur selon l'invention peut être facilement réalisé à partir de circuits numériques traditionnels mettant en oeuvre les fonctions du bloc d'entrée 2, du bloc de commande 3 et du bloc de reconstruction de trames 4.

Bien entendu, l'invention n'est pas limitée à l'exemple de réalisation ci-dessus décrit, et on pourra prévoir d'autres variantes sans pour cela sortir du cadre de l'invention.

## Revendications

**1. )** Un régénérateur pour transmettre des trames (60) de signaux numériques incluant des éléments de charge (62) et des éléments de justification (63,64), comprenant un moyen d'extraction (2) pour extraire les signaux numériques des trames incidentes reçues à un rythme d'émission, un moyen de reconstruction (4) incluant une mémoire (49) dans laquelle sont enregistrés temporairement lesdits signaux numériques extraits des trames incidentes et agencé pour former des trames à transmettre au rythme d'un signal d'horloge interne à partir des signaux numériques enregistrés dans la mémoire, et un moyen de commande (3) qui agit sur lesdits signaux numériques extraits des trames incidentes pour compenser des différences entre le rythme d'émission et le rythme du signal d'horloge locale, caractérisé en ce que:
a) le moyen d'extraction comprend un égaliseur fractionné (28) à plusieurs prises (21) commandées à une fréquence multiple du rythme du signal d'horloge locale qui fournit des signaux numériques des trames incidentes au rythme du signal d'horloge locale, le moyen d'extraction étant agencé pour dériver un premier signal d'erreur (d-) et un second signal d'erreur (d+) représentatifs de différences entre le rythme d'émission et le rythme du signal d'horloge locale, l'égaliseur étant agencé pour supprimer ou dupliquer des signaux numériques en réponse à un premier (c-) ou à un second (c+) signal de commande;
b) le moyen de commande est agencé pour dériver à partir des signaux numériques présents en sortie de l'égaliseur, d'une part, un premier signal de contrôle (Tc) indiquant qu'un élément de charge inclus dans une trame incidente est présent en sortie de l'égaliseur, et d'autre part, un second signal de contrôle (Tb) indiquant qu'un élément de justification d'une trame incidente contenant une information de bourrage est présent dans l'égaliseur, dériver le premier signal de commande (c-) à partir du premier signal d'erreur (d-) et du second signal de contrôle (Tb) de sorte que l'égaliseur supprime uniquement des éléments de bourrage des trames incidentes en réponse au premier signal de commande (c-) et dériver le second signal de commande (c+) à partir du second signal d'erreur (d+) de manière à ce que l'égaliseur duplique des éléments de charge ou des éléments de justification des trames incidentes en réponse au second signal de commande (c+);
c) le moyen de reconstruction de trame est agencé pour commander l'enregistrement dans la mémoire des éléments de charge indiqués par ledit premier signal de contrôle (Tc) et former des trames à transmettre à partir des éléments de charges enregistrés dans la mémoire et d'éléments de justification regénérés.

**2. )** Le régénérateur selon la revendication 1, dans lequel le moyen d'extraction comporte un moyen de détection d'erreur (27) agencé pour fournir les signaux d'erreur (d+,d-) à partir de la détection d'une dissymétrie des coefficients de l'égaliseur de part et d'autre du coefficient central de l'égaliseur.

**3. )** Le régénérateur selon la revendication 2, dans lequel l'égaliseur fractionné (28) comporte des moyens de calcul (22) des coefficients associés à des multiplieurs (23), les moyens de calculs étant agencés pour permuter par rotation les coefficients fournis au multiplieurs en réponse à l'un ou à l'autre des signaux de commande.

**4. )** Le régénérateur selon l'une des revendications précédentes dans lequel le premier signal d'erreur (d-) est indicatif du fait que le rythme du signal d'horloge interne est inférieur au rythme d'émission et inversement pour le second signal d'erreur (d+).

**5. )** Le régénérateur selon l'une des revendications précédentes, dans lequel le moyen de commande fournit en tant que second signal de commande (c+) directement le second signal d'erreur (d+).

**6. )** Le régénérateur selon l'une des revendications précédentes, dans lequel les éléments de justification comprennent des éléments d'indication de justification (63) et des éléments d'opportunité de justification (64) associés aux éléments d'indication de justification, le moyen de commande étant agencé pour dériver le second signal de contrôle (Tb) à partir de l'observation des éléments d'indication de justification présents en sortie du module d'extraction.
